# EUROPÄISCHE PATENTSCHRIFT

(11) **EP 0 327 686 B1**
(45) Veröffentlichungstag und Bekanntmachung des Hinweises auf die Patenterteilung: **27.01.1993**
(21) Anmeldenummer: 88119059.9
(22) Anmeldetag: 17.11.1988
(51) Int. Cl.: H04M 7/00, H04Q 3/62

(54) **Schaltungsanordnung für eine Externleitungsübertragung von Kommunikations-Vermittlungsanlagen, insbesondere Fernsprechnebenstellenanlagen**
Circuit arrangement for a trunk line in communication exchanges, in particular private telephone branch exchanges
Circuit pour un joncteur de ligne extérieure dans des centraux de communications, en particulier des centraux téléphoniques privés

(30) Priorität: 11.02.1988 DE 3804216
(43) Veröffentlichungstag der Anmeldung: 16.08.1989
(73) Patentinhaber: TELENORMA GMBH, 60326 Frankfurt am Main (DE)
(72) Erfinder: Lauer, Walter, Dipl.-Ing., D-6230 Frankfurt 80 (DE); Huth, Stephan, Dipl.-Ing., D-6467 Hasselroth 1 (DE); Sopp, Ottmar, Dipl.-Ing., D-6000 Frankfurt/Main 1 (DE)

(56) Entgegenhaltungen:
- EP-A- 0 095 675
- WO-A-86/04472
- GB-A- 2 183 426
- GB-A- 2 184 630

## Beschreibung

Die Erfindung betrifft eine Schaltungsanordnung für eine Externleitungsübertragung von Kommunikations-Vermittlungsanlagen, insbesondere Fernsprechnebenstellenanlagen nach dem Oberbegriff des Patentanspruchs 1.

Externleitungsübertragungen werden in der Vermittlungstechnik als Schnittstellen zwischen zwei Vermittlungsanlagen eingesetzt, um die für den Verbindungsaufbau notwendigen Kriterien, wie Belegung und Wahlinformation, zwischen den Vermittlungsanlagen austauschen zu können, und um danach die Übertragung von Nutzinformation zu ermöglichen. Dabei ist je nach Betriebsweise und nach der Art der Verbindungsbeziehung eine besondere Verfahrensweise festgelegt für den Austausch von Belegungskriterien und Wahlinformationen. In der Nebenstellentechnik sind hauptsächlich sogenannte Amtsübertragungen eingesetzt, worüber die Verbindungen mit dem öffentlichen Fernsprechnetz aufgebaut werden. Diese Amtsübertragungen verhalten sich in ihrer einfachsten Form so wie ein an die Amtsleitung angeschlossener Fernsprechapparat.

Um Fernsprechnebenstellenanlagen untereinander zu verbinden, ist es bekannt, verschiedene Arten von sogenannten Querverbindungsübertragungen, sowie Nebenanschlußübertragungen einzusetzen, wobei die Übertragung von Belegungskriterien und die Übertragung von Wahlinformation in Abhängigkeit von den Anforderungen und den Betriebsbedingungen in anderer Weise vorgenommen wird als bei einfachen Amtsübertragungen. Derartige Übertragungen und auch Amstübertragungen sind in bekannter Weise nur für den jeweiligen Anwendungsfall geeignet und dafür speziell konzipiert.

Eine Amtsübertragung einfacher Art, wie sie in Fernsprechnebenstellenanlagen einsetzbar ist, wird in der DE-OS 22 01 986 unter der Überschrift Schaltungsanordnung für einen Verbindungssatz einer Fernsprechnebenstellenanlage beschrieben. Es ist dort u.a. offenbart, wie die Belegung der Gegenanlage durch Schleifenschluß an den Adern C und D stattfindet, und wie die Wahlinformation durch impulsweises Öffnen der Schleife übertragen wird. Eine derart konzipierte Leitungsübertragung ist nur für eine vorbestimmte Art von Belegungskriterien und Wahlinformationsübertragung geeignet und läßt sich für andere Anwendungsfälle nicht benutzen.

Aus EP-A-0 095 675 ist eine für unterschiedliche Leitungsübertragungen geeignete Schaltungsanordnung bekannt.

Die Aufgabe der Erfindung besteht darin, eine Schaltungsanordnung anzugeben, die vom Prinzip her so aufgebaut ist, daß mehrere Arten von Belegungskriterien, das Senden und Empfangen von sonstigen Kennzeichen, sowie mehrere Arten der Wahlinformationsübertragung möglich sind. Dabei sollen die an den Leitungsadern angeschlossenen Schaltmittel in der räumlichen und elektrischen Anordnung in gleicher Weise auch dann beibehalten werden, wenn unterschiedliche Anwendungsfälle vorliegen.

Zur Lösung dieser Aufgabe sind Merkmale vorgesehen, wie sie im Patentanspruch 1 angegeben sind. Mit den in den Unteransprüchen angegebenen Weiterbildungen der Erfindung werden einzelne Anwendungsfälle des im Patentanspruch 1 angegebenen Prinzips aufgezeigt. Damit wird in vorteilhafter Weise erreicht, daß eine einheitliche Anordnung der Schaltmittel so ausgelegt ist, daß lediglich durch entsprechende Festlegung der Steuerprozeduren, die für den gewünschten Anwendungsfall erforderlichen Schaltzustände verwirklicht werden können.

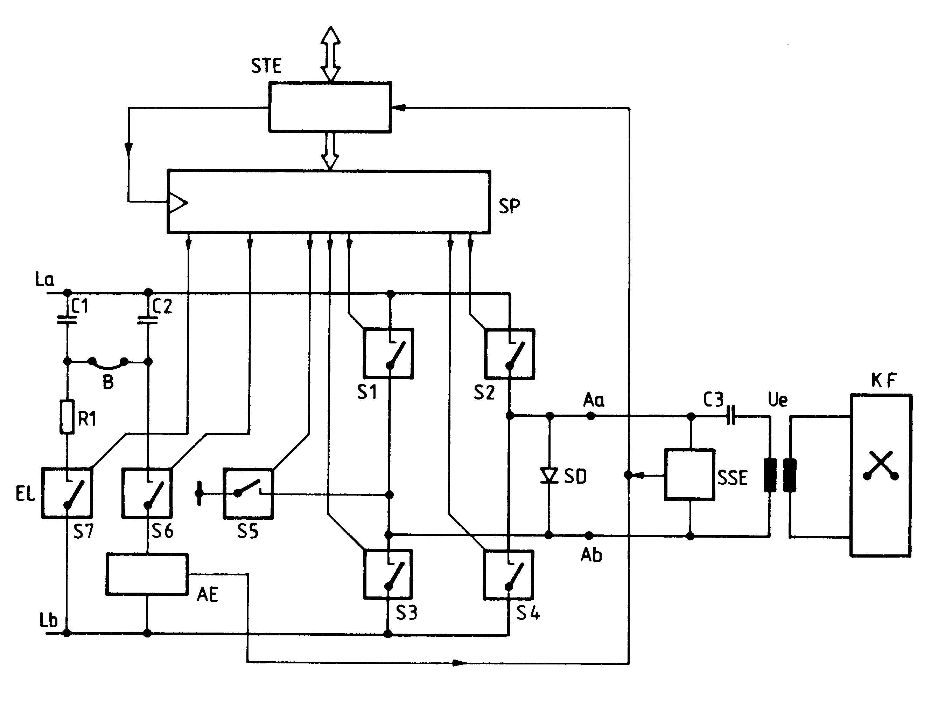

Ein Ausführungsbeispiel der Erfindung wird nachfolgend anhand einer Zeichnung näher erläutert. In der Zeichnung ist das Blockschaltbild einer Externübertragung dargestellt, wobei die zu einer anderen Vermittlungsanlage führende Externleitung EL mit ihren Leitungsadern La und Lb auf der linken Seite angeschlossen ist. Es sind verschiedene Schaltmittel S1 bis S7 vorgesehen, die Verbindungen zu den Leitungsadern La, Lb herstellen können. Davon sind jeweils paarweise an die eine Leitungsader La Schaltmittel S1 und S2 und an die andere Leitungsader Lb Schaltmittel S3 und S4 so angeschlossen, daß eine Durchschaltung zur jeweils gleichartigen weiterführenden Ader Aa bzw. Ab oder auch zur jeweils anderen weiterführenden Ader Ab bzw. Aa erfolgen kann. In welcher Weise die Schaltmittel S1 bis S7 in Abhängigkeit vom jeweiligen Betriebzustand einzeln angesteuert werden, wird nachfolgend anhand einiger Funktionsbeispiele beschrieben. An die weiterführenden Adern Aa und Ab ist ein Schleifenstromerkenner SSE angeschlossen, der das Vorhandensein eines Stromflusses auf der Externleitung EL festellen kann und an die Steuereinrichtung STE meldet. Da dieser Schleifenstromerkenner SSE aus elektronischen Schaltmitteln besteht, ist eine Diode SD vorgesehen, die bei einer falschen Polung der Externleitung EL einen Kurzschluß darstellt und somit den Schleifenstromerkenner vor einer falsch gepolten Spannung schützt. Die weiterführenden Adern sind in bekannter Weise über einen Übertrager Ue an ein Koppelfeld KF angeschlossen, wobei ein Kondensator C3 für einen gleichstromfreien Übertragungsweg vorgesehen ist.

Mit einem weiteren Schaltmittel S5 kann ein Potential an die Externleitung EL angeschaltet werden, wobei dieses PotentiaL entweder an beide Leitungsadern La, Lb oder wahlweise an eine dieser Leitungsadern La oder Lb angeschaltet werden. In Abhängigkeit davon, in welcher Weise dieses Potential an die Externleitung EL angeschaltet werden soll, werden die Schaltmittel S1 bzw. S3 entweder einzeln oder auch zusammen angesteuert.

Um einen Anruferkenner AE an die Externleitung EL anschalten zu können, und um diesen beispielsweise während eines Gesprächszustands abschalten zu können, ist ein zusätzliches Schaltmittel S6 vorgesehen.

Mit einem weiteren Schaltmittel S7 kann während der Aussendung von Wahlimpulsen den behördlichen Vorschriften entsprechend eine aus einem Kondensator C1 und einem Widerstand R1 bestehende Funkenlöschkombination an die Externleitung EL angeschaltet werden. Dabei sind der Kondensator C1 und ein im Stromkreis des Anruferkenners AE liegender Kondensator C2 so angeordnet, daß sie mit einer Brücke B parallel geschaltet werden können, wenn eine vorgeschriebene Dimensionierung zu erfüllen ist.

Die Steuerbefehle für alle Schaltmittel S1 bis S7 kommen von einem Zwischenspeicher SP, der seine Einstellbefehle von einer der Externleitungsübertragung zugeordneten Steuereinrichtung STE erhält. Diese Steuereinrichtung STE steht mit einer zentralen oder teilzentralen, nicht dargestellten Steuereinrichtung in Verbindung, um von dort Steuerbefehle zu erhalten, oder in der Externleitungsübertragung empfangene Schaltkriterien dorthin zu übertragen.

Anhand einiger Funktionsbeispiele soll nun die Wirkungsweise der einzelnen Schaltmittel erläutert werden. Zunächst sei angenommen, daß eine abgehende Belegung der Externleitungsübertragung erfolgen soll, wobei dem betreffenden Anwendungsfall entsprechend bei der Externleitung EL eine Scheife zu bilden ist. Aufgrund der von der übergeordneten Steuereinrichtung kommenden Schaltbefehle und der in der Steuereinrichtung STE der Externleitungsübertragung eingetragenen Speicherkriterien werden bei einer abgehenden Belegung Informationen in den Zwischenspeicher gegeben, womit zunächst die beiden Schaltmittel S1 und S3 angesteuert werden. Es kommt dabei ein Stromfluß zustande, der bei richtiger Polarität den Schleifenstromerkenner SSE zum Ansprechen bringt. Dieses Kriterium wird der Steuereinrichtung STE mitgeteilt, wodurch diese erkennt, welche Polarität auf den Leitungsadern La und Lb vorliegt. Kennzeichen über die Art der Polarität werden dann innerhalb der Steuereinrichtung STE zwischengespeichert, so daß bei einer späteren Neubelegung die gleichen Schaltmittel wieder angesteuert werden.

Liegt bei einer Belegungsprozedur, wie sie zuvor beschrieben worden ist, eine entgegengesetzte Polung vor, so kann der Schleifenstromerkenner SSE nicht ansprechen. Wenn die Steuereinrichtung STE nach dem Einschalten von Schaltmitteln, im vorliegenden Beispiel S2 und S3 erkennt, daß der Schleifenstromerkenner SSE nicht angesprochen hat, so wird veranlaßt, daß diese Schaltmittel S2 und S3 wieder abgeschaltet werden und danach die beiden anderen Schaltmittel S1 und S4 durchschalten. Wenn nun ein Schleifenstromfluß erkannt wird, so ist damit festgelegt, daß eine andere Polung der Leitungsadern La und Lb vorliegt, so daß diese Konstellation in der Steuereinrichtung STE eingespeichert wird. Auf diese Weise ist es möglich, daß bei einer Neubelegung sofort diejenigen Schaltmittel, entweder S2 und S3 oder S1 und S4, eingeschaltet werden, die der jeweiligen Polarität der Externleitung EL entsprechen.

Wenn im Anschluß an eine erfolgte abgehende Belegung Wahlinformation übertragen wird, so wird unter der Vorausssetzung, daß wie zuvor beschrieben worden ist, die Schaltmittel S2 und S3 durchgeschaltet sind, die Wahlimpulsgabe durch impulsweises Ansteuern des Schaltmittels S2 bewirkt. Der Inhalt des Zwischenspeichers SP wird dabei entsprechend den für eine Impulsgabe vorgeschriebenen Zeitbedingungen von der Steuereinrichtung STE aus jeweils verändert. Außerdem wird während des Aussendens einer Impulsserie, also einer Ziffer, zusätzlich das Schaltmittel S4 durchgeschaltet, so daß die weiterführenden Adern Aa und Ab kurzgeschlossen werden. Demzufolge wird bei anderer Polarität der Externleitung EL, also dann, wenn die Schaltmittel S1 und S4 die Schleife gebildet haben, die Impulsgabe durch das Schaltmittel S1 vorgenommen, während das Schaltmittel S2 den Kurzzschluß der weiterführenden Adern Aa und Ab bewirkt.

Während des Aussendens von Wahlimpulsen wird außerdem zeitgleich mit dem den Kurzschluß der weiterführenden Adern Aa und Ab bewirkenden Schaltmittel S4 oder S2 ein weiteres Schaltmittel S7 angesteuert, um während dieser Zeit eine Funkenlöschkombination C1 und R1 an die Externleitung EL anzuschalten. Für die Anschaltung eines Anruferkenners AE an die Externleitung EL ist ein weiteres Schaltmittel S6 vorgesehen, welches im Ruhezustand durchgeschaltet ist, damit der Anruferkenner AE eine kommende Belegung erkennen kann, die beispielsweise in Form eines Wechselstromsignals erscheint. Während des Gesprächszustands, also dann wenn eine Schleifenbildung erfolgt ist, wird dieses Schaltmittel S6 geöffnet, damit der Anruferkenner AE von der Externleitung SL abgetrennt wird.

Die gleiche Schaltungsanordnung kann auch für eine andere Art von Externleitung EL angewendet werden, wenn die Belegungskriterien nicht durch Schleifenschluß gebildet werden. Durch den Einsatz und die Ansteuerung des zusätzlichen Schaltmittels S5 kann ein vorgegebenes Potential dauernd oder mit den einem Kennzeichenplan zugrundeliegenden Impulslängen auf die Externleitung EL gegeben werden. Dabei ist es wie bereits erwähnt möglich, dieses Potential auf eine der beiden Adern oder auf beide Adern gleichzeitig zu senden. Eine Übertragung von Wahlinformation ist auf den entsprechenden Wegen mit Hilfe des zusätzlichen Schaltmittels S5 ebenfalls möglich.

Außerdem lassen sich mit Hilfe des zusätzlichen Schaltmittels S5 Erdtastenfunktionen in allen Variationen nachbilden. So ist es beispielsweise möglich, bei bestehender Schleife Erdpotential nur auf die Leitungsader La zu schalten, indem die Schaltmittel S5 und S1 angesteuert werden. Entsprechendes gilt für die Schaltmittel S5 und S3 wenn nur die andere Leitungader Lb geerdet werden soll. Das Erden beider Leitungsadern La und Lb wird dadurch erreicht, daß neben dem Schaltmittel S5 die beiden Schaltmittel S1 und S3 gleichzeitig angesteuert werden. Es ist außerdem möglich, ein besonderes Schaltkriterium zur Belegung abzugeben, ohne daß vorher eine Schleife gebildet worden ist.

Bei der Schleifenbildung ist es außerdem möglich, zunächst durch das Einschalten von zwei Schaltmitteln, entweder S1 und S3 oder S2 und S4 einen Kurzschluß der Externleitung EL herzustellen, damit bei der Gegenanlage mindestens ein Schleifenstromerkenner sicher ansprechen kann, bevor der diesseitige Schleifenstromerkenner SSE eingeschaltet wird, womit die Schleife naturgemäß einen höheren Widerstand erhält. Auf diese Weise ist es möglich, eine Vorabbelegung durchzuführen, wenn Reichweitenprobleme auftreten, oder wenn das auf der Übertragungsstrecke festgelegte Kennzeichenverfahren eine Vorabbelegung vorsieht.

Die an die Leitungsadern La und Lb der Externleitung EL angeschlossenen Schaltmittel S1 bis S7 weisen in ihrem Eingangskreis einen Opto-Kopoler auf, der mit den bei einer Logikfamilie üblichen Potentialen angesteuert wird. Es ist damit in bekannter Weise eine galvanische Trennung des Eingangssteuerkreises mit der eine höhere Spannung bzw. einen höheren Strom führenden Schaltstrecke, die in der Zeichnung als Kontakt dargestellt ist, gegeben. Die Schaltstrecken selbst werden durch bipolar arbeitende Feldeffekt-Transistor-Anordnungen gebildet, welche relativ niederohmig unabhängig von der Polarität durchschalten. Es ist zweckmäßig, als Steuereinrichtung STE einen Mikroprozessor einzusetzen, welcher den Inhalt des Zwischenspeichers SP immer dann ändert, wenn eine neue Schaltstellung eintreten soll. Auf diese Weise lassen sich alle Schaltstellungen einschließlich der Zeitbedingungen so realisieren, wie sie für den jeweiligen Anwendungsfall erforderlich sind.

## Patentansprüche

1. Schaltungsanordnung für eine Externleitungsübertragung von Kommunikations-Vermittlungsanlagen, insbesondere Fernsprechnebenstellenanlagen, wobei Schaltmittel vorgesehen sind, die bei einer abgehenden Belegung der Externleitung die Absendung von Belegungskennzeichen, Wahlinformation und weiteren Kennzeichen ebenso ermöglichen, wie das Empfangen von Anrufkennzeichen und weiteren Informationen,
dadurch gekennzeichnet,
daß an jeder der zur Externleitung (EL) gehörenden Adern (La,Lb) einzeln steuerbare Schaltmittel (S1,S2; S3,S4) paarweise angeschlossen sind, wovon jeweils das eine (S2,S3) die Leitungsadern (La,Lb) direkt zur jeweils weiterführenden Ader (Aa,Ab) durchschalten kann und jeweils das andere (S1,S4) eine Verbindug zur jeweils anderen Ader (Ab,Aa) herstellen kann, und daß von einer Steuereinrichtung (STE) in Abhängigkeit vom jeweiligen Betriebszustand bestimmt wird, welche der Schaltmittel (S1,S2,S3,S4) dauernd oder temporär durchgeschaltet oder ausgeschaltet sind.

2. Schaltungsanordnung nach Anspruch 1,
dadurch gekennzeichnet,
daß an die weiterführenden Adern (Aa,Ab) ein Schleifenstromerkenner (SSe) parallel angeschaltet ist, womit bei Inbetriebnahme oder erstmaliger Belegung der Externleitung (EL) festgestellt wird, bei welcher Schaltstellung der Schaltmittel (S1,S2,S3,S4) ein Schleifenstromfluß erkannt werden kann, und daß diese Schaltstellung in der Steuereinrichtung (STE) gespeichert und bei Neubelegung sofort eingestellt wird.

3. Schaltungsanordnung nach Anspruch 2,
dadurch gekennzeichnet,
daß ein Verschwinden des Schleifenstroms während einer Belegung vom Schleifenstromerkenner (SSE) festgestellt und an die Steuereinrichtung (STE) gemeldet wird, worauf diese veranlaßt, daß die durchgeschalteten Schaltmittel (z.B. S2,S3) abgeschaltet und die anderen Schaltmittel (z.B. S1,S4) durchgeschaltet werden, und daß eine von der externen Vermittlungsanlage vorgenommene Umpolung der Spannung am erneuten Fließen des Schleifenstroms vom Schleifenstromerkenner (SSE) erkannt wird.

4. Schaltungsanordnung nach Anspruch 3,
dadurch gekennzeichnet,
daß der Schleifenstromerkenner (SSE) mit einer elektronisch nachgebildeten Induktivität ausgestattet ist.

5. Schaltungsanordnung nach einem der Ansprüche 2 bis 4,
dadurch gekennzeichnet,
daß zum Schutz des Schleifenstromerkenners (SSE) eine Diode (SD) an die weiterführende Andern (Aa,Ab) angeschlossen ist, die bei falscher Polung der Spannung einen Kurzschluß bildet.

6. Schaltungsanordnung nach Anspruch 1,
dadurch gekennzeichnet,
daß mit den paarweise an die Leitungsadern (La,Lb) der Externleitung (EL) angeschlossenen Schaltmitteln (S1,S2,S3,S4) die Aussendung von Impulswahl gesteuert wird, wobei mindestens ein Schaltmittel (z.B. S2) für jeden Einzelimpuls abgeschaltet wird und zwei weitere Schaltmittel (z.B.S3 und S4) während einer Impulsserie durchgeschaltet werden, um die weiterführende Leitung (Aa,Ab) kurzzuschließen.

7. Schaltungsanordnung nach Anspruch 6,
dadurch gekennzeichnet,
daß während einer Impulsserie ein weiteres Schaltmittel (S7), angesteuert von der Steuereinrichtung (STE), durchschaltet, um eine aus Widerstand (R1) und Kondensator (C1) bestehende Kombination an die Externleitung (EL) anzuschalten.

8. Schaltungsanordnung nach Anspruch 1,
dadurch gekennzeichnet,
daß ein weiteres Schaltmittel (S6) vorgesehen ist, um einen Anruferkenner (AE) an die Leitungsadern (La,Lb) der Externleitung anzuschalten, und daß der Ausgang des Anruferkenners (AE) mit dem Ausgang des Schleifenstromerkenners (SSE) verbunden ist, so daß ein Anrufsignal an die Steuereinrichtung (STE) ebenso gemeldet wird, wie eine Schleifenstromänderung.

9. Schaltungsanordnung nach den Ansprüchen 7 und 8,
dadurch gekennzeichnet,
daß der während einer Wahlserie angeschaltete Kondensator (C1) und ein im Stromkreis des Anruferkenners (AE) liegender Kondensator (C2) so angeordnet sind, daß diese leicht durch eine Brücke (B) parallel geschaltet werden können.

10. Schaltungsanordnung nach Anspruch 1,
dadurch gekennzeichnet,
daß ein zusätzliches Schaltmittel (S5) vorgesehen ist, welches in Verbindung mit mindestens einem der paarweise an die Leitungsadern (La,Lb) der Externleitung (EL) angeschalteten Schaltmitteln (z.B. S1,S3) ein Kennzeichenpotential (z.B. Erdpotential) an eine oder an beide Leitungsadern (La,Lb) anschalten kann, welches ebenfalls von der Steuereinrichtung (STE) Schaltbefehle erhält.

11. Schaltungsanordnung nach einem der Ansprüche 1 bis 10,
dadurch gekennzeichnet,
daß die Ansteuersignale für die besagten Schaltmittel (S1 bis S7) von einem Zwischenspeicher (SP) geliefert werden, welcher von der Steuereinrichtung (STE) kurze Einstellbefehle jeweils dann erhält, wenn eine Zustandsänderung eintreten soll.

12. Schaltungsanordnung nach einem der Ansprüche 1 bis 10,
dadurch gekennzeichnet,
daß die Schaltmittel (S1 bis S7) im Eingangskreis einen Opto-Koppler aufweisen, und daß die Schaltstrecke durch eine bipolar arbeitende Feldeffekt-Transistor-Anordnung gebildet wird.

## Claims

1. Circuit arrangement for an outside line transmission of communications exchange installations, in particular auxiliary telephone exchange installations, wherein switching means are provided which in the case of an outward seizing of the outside line enable the emission of seizing indications, dialling information and further indications just as the reception of call indications and further information data, characterised thereby, that individually controllable switching means (S1, S2; S3, S4) are connected in pairs to each of the wires (La, Lb) belonging to the outside line (EL), of which switching means the one (S2, S3) each time can switch the line wires (La, Lb) through directly to the wire (Aa, Ab) respectively leading further and the other (S1, S4) each time can produce a connection to the respective other wire (Ab, Aa), and that it is ascertained by a control equipment (STE) in dependence on the respective operational state which of the switching means (S1, S2; S3, S4) is switched through or off permanently or temporarily.

2. Circuit arrangement according to claim 1, characterised thereby, that a loop current recognition device (SSe) is connected in parallel to the wires (Aa, Ab) leading further, whereby it is ascertained - when putting the outside line (EL) into operation or seizing it for the first time - for which switch setting of the switching means (S1, S2; S3, S4) a loop current flow can be recognised, and that this switch setting is stored in the control equipment (STE) and set at once on new seizing.

3. Circuit arrangement according to claim 2, characterised thereby, that a disappearance of the loop current during a seizing is ascertained by the loop current recognition device (SSE) and reported to the control equipment (STE), whereupon this causes the switched-through switching means (for example S2, S3) to be switched off and the other switching means (for example S1, S4) to be switched through, and that a change in polarity of the voltage, which is undertaken by the external exchange installation, is recognised by the loop current recognition device (SSE) from the renewed flow of the loop current.

4. Circuit arrangement according to claim 3, characterised thereby, that the loop current recognition device (SSE) is equipped with an electronically replicated inductance.

5. Circuit arrangement according to one of the claims 2 to 4, characterised thereby, that a diode (SD), which forms a short-circuit in the case of wrong polarity of the voltage, is connected to the wires (Aa, Ab) leading further for the protection of the loop current recognition device (SSE).

6. Circuit arrangement according to claim 1, characterised thereby, that the emission of pulse dialling is controlled by the switching means (S1, S2; S3, S4) connected in pairs to the line wires (La, Lb) of the outside line (EL), wherein at least one switching means (for example S2) is switched off for each individual pulse and two further switching means (for example S3 and S4) are switched through during a pulse series in order to short-circuit the line (Aa, Ab) leading further.

7. Circuit arrangement according to claim 6, characterised thereby, that a further switching means (S7) driven by the control equipment (STE) switches through during a pulse series in order to switch a combination consisting of a resistor (R1) and a capacitor (C1) to the outside line (EL).

8. Circuit arrangement according to claim 1, characterised thereby, that a further switching means (S6) is provided in order to connect a call recognition device (AE) to the line wires (La, Lb) of the outside line and that the output of the call recognition device (AE) is connected with the output of the loop current recognition device (SSE) so that a call signal is reported to the control equipment (STE) just as a change in loop current.

9. Circuit arrangement according to claim 7 and 8, characterised thereby, that the capacitor (C1) switched on during a dialling series and a capacitor (C2) lying in the current circuit of the call recognition device (AE) are so arranged that these can easily be connected in parallel by a bridge (B).

10. Circuit arrangement according to claim 1, characterised thereby, that an additional switching means (S5) is provided, which - in conjunction with at least one of the switching means (for example S1, S3) connected in pairs to the line wires (La, Lb) of the outside line (EL) - can switch an indicating potential (for example earth potential) to one or both of the line wires (La, Lb) and which likewise receives switching commands from the control equipment (STE).

11. Circuit arrangement according to one of the claims 1 to 10, characterised thereby that the driving signals for the said switching means (S1 to S7) are supplied by an intermediate storage device (SP), which receives short setting commands from the control equipment (STE) each time a change in state shall occur.

12. Circuit arrangement according to one of the claims 1 to 10, characterised thereby that the switching means (S1 to S7) comprise an optical coupler in the input circuit and that the switching path is formed by a field effect transistor arrangement operating in bipolar manner.

## Revendications

1. Circuit pour un joncteur de ligne extérieure dans des centraux de communications, en particulier des centraux téléphoniques privés, dans lequel sont prévus des moyens de commutation qui lors d'une occupation sortante de la ligne extérieure permettent l'envoi de signaux d'occupation, d'informations de sélection et d'autres signaux de même que la réception de signaux d'appel et d'autres informations, caractérisé en ce que des moyens de commutation commandés (S1, S2, S3, S4) sont connectés par paires à chacun des fils (La, Lb) de la ligne extérieure (EL), un moyen de commutation (S2, S3) de chaque paire pouvant établir la connexion directe entre un des fils (La, Lb) de la ligne et un fil d'extension (Aa, Ab) et l'autre moyen de commutation (S1, S4) peut établir une liaison avec l'autre fil d'extension (Ab, Aa), et en ce qu'un dispositif de commande (STE) détermine selon l'état de service ceux des moyens de commutation (S1, S2, S3, S4) qui sont passants ou bloqués en permanence ou temporairement.

2. Circuit selon la revendication 1, caractérisé en ce que, entre les fils d'extension (Aa, Ab), est connecté en parallèle un détecteur de courant de boucle (SSE) avec lequel, lors de la mise en service ou de la première occupation de la ligne extérieure (EL) il est déterminé pour quel état de commutation des moyens de commutation (S1, S2, S3, S4) une conduction de courant peut être détectée, et en ce que cet état de commutation se trouve mémorisé dans le dispositif de commande (STE) et pris en compte dès qu'il y a une nouvelle occupation.

3. Circuit selon la revendication 2, caractérisé en ce qu'une disparition du courant de boucle pendant une occupation est constatée par le détecteur de courant de boucle (SSE) et signalée au dispositif de commande (STE) après quoi celui-ci autorise que les moyens de commutation passants (par exemple S2, S3) soient bloqués et que les autres moyens de commutation (par exemple S1, S4) soient rendus passants et en ce qu'une inversion de polarité entreprise à partir d'une installation téléphonique extérieure est reconnue par le détecteur de courant de boucle (SSE) lors du passage réitéré du courant de boucle.

4. Circuit selon la revendication 3 caractérisé en ce que le détecteur de courant de boucle (SSE) est constitué d'une inductance simulée électroniquement.

5. Circuit selon l'une des revendications 2 à 4 caractérisé en ce que, pour protéger le détecteur de courant de boucle (SSE), une diode (SD) est connectée aux fils d'extension (Aa, Ab), laquelle diode réalise un court-circuit en cas de mauvaise polarité de la tension.

6. Circuit selon la revendication 1 caractérisé en ce que l'émission d'impulsions de sélection est commandée avec les moyens de commutation (S1, S2, S3, S4) connectés par paires aux fils de ligne (La, Lb) de la ligne extérieure (EL), au moins un moyen de commutation (par exemple S2) est bloquant pour chaque impulsion et deux autres moyens de commutation (par exemple S3 et S4) sont passants pendant une série d'impulsions de manière à court-circuiter la ligne d'extension (Aa, Ab).

7. Circuit selon la revendication 6, caractérisé en ce que, pendant une série d'impulsions, un autre moyen de commutation (S7), commandé par le dispositif de commande (STE), est passant de manière à connecter à la ligne extérieure (EL) une combinaison constituée d'une résistance (R1) et d'un condensateur (C1).

8. Circuit selon la revendication 1, caractérisé en ce qu'un autre moyen de commutation (S6) est prévu pour connecter un signaleur d'appel (AE) aux fils (La, Lb) de la ligne extérieure, et en ce que la sortie du signaleur d'appel (AE) est reliée à la sortie du détecteur de courant de bouche (SSE) de manière qu'un signal d'appel sur le dispositif de commande (STE) soit ainsi signalé comme une modification du courant de boucle.

9. Circuit selon les revendications 7 et 8, caractérisé en ce que le condensateur (C1) connecté pendant une série de sélection et un condensateur (C2) situé dans le circuit du signaleur d'appel (AE) sont agencés de manière qu'ils puissent être facilement connectés en parallèle par un pontage (B).

10. Circuit selon la revendication 1, caractérisé en ce qu'il est prévu un moyen de commutation additionnel (S5) qui, par l'intermédiaire d'au moins un des moyens de commutation (par exemple S1, S3) connectés par paires aux fils (La, Lb) de la ligne extérieure (EL), peut appliquer un potentiel de référence (par exemple le potentiel de terre) à un ou aux deux fils de ligne (La, Lb), ledit moyen de commutation recevant également des ordres de commutation du dispositif de commande (STE).

11. Circuit selon l'une des revendications 1 à 10, caractérisé en ce que les signaux de commande pour les moyens de commutation (S1 à S7) précités sont délivrés par une mémoire-tampon (SP) qui reçoit du dispositif de commande (STE), de courts ordres de mise à jour chaque fois qu'un changement d'état doit être introduit.

12. circuit selon l'une des revendications 1 à 10, caractérisé en ce que les moyens de commutation (S1 à S7) forment un opto-coupleur dans le circuit d'entrée et en ce que la section de commutation est réalisée par un dispositif transistor à effet-de-champ travaillant en bipolaire.
